(19) **Europäisches Patentamt**
**European Patent Office**
**Office européen des brevets**

(11) **EP 2 726 916 B1**

(12) **FASCICULE DE BREVET EUROPEEN**

(45) Date de publication et mention
de la délivrance du brevet:
**19.08.2020 Bulletin 2020/34**

(21) Numéro de dépôt: **12738553.2**

(22) Date de dépôt: **28.06.2012**

(51) Int Cl.:
*G02B 1/14* (2015.01)     *G02B 1/10* (2015.01)
*G02B 1/11* (2015.01)

(86) Numéro de dépôt international:
**PCT/FR2012/051500**

(87) Numéro de publication internationale:
**WO 2013/004954 (10.01.2013 Gazette 2013/02)**

(54) **ARTICLE OPTIQUE COMPRENANT UN REVÊTEMENT ANTI-REFLETS AYANT DES PROPRIÉTÉS DE RÉSISTANCE AUX FISSURES SOUS CONTRAINTE MÉCANIQUE AMÉLIORÉE**

OPTISCHER ARTIKEL MIT EINER ANTIREFLEXIONSSCHICHT MIT VERBESSERTEN RISSBESTÄNDIGKEITSEIGENSCHAFTEN UNTER MECHANISCHER BEANSPRUCHUNG

OPTICAL ARTICLE INCLUDING AN ANTIREFLECTION COATING HAVING IMPROVED CRACK-RESISTANCE PROPERTIES UNDER MECHANICAL STRESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2011 FR 1155955**

(43) Date de publication de la demande:
**07.05.2014 Bulletin 2014/19**

(73) Titulaire: **Essilor International**
**94220 Charenton-le-Pont (FR)**

(72) Inventeurs:
• **COUE, Peggy**
**94220 Charenton-le-Pont (FR)**
• **KUDLA, Amélie**
**94220 Charenton-le-Pont (FR)**
• **BONNET, Isabelle**
**94220 Charenton-le-Pont (FR)**

(74) Mandataire: **Plasseraud IP**
**66, rue de la Chaussée d'Antin**
**75440 Paris Cedex 09 (FR)**

(56) Documents cités:
**WO-A1-2008/062142     FR-A1- 2 881 230**
**US-A1- 2005 266 208**

**EP 2 726 916 B1**

**Description**

La présente invention concerne un article optique, de préférence une lentille ophtalmique, comprenant un substrat transparent en verre organique, un revêtement primaire comprenant du polyuréthane et de la silice particulaire, un revêtement anti-abrasion, et un revêtement anti-reflets, lesquels revêtements, et en particulier le revêtement anti-reflets, possèdent une résistance améliorée aux fissures lorsque l'article optique subit de fortes contraintes mécaniques, comme par exemple lors des étapes de débordage et de montage des verres dans les montures de lunettes. L'invention concerne également un procédé de fabrication d'un tel article.

Dans le domaine de l'optique ophtalmique, il est classique de revêtir une lentille ophtalmique de divers revêtements afin de conférer à cette lentille diverses propriétés mécaniques et/ou optiques.

Ainsi, on peut appliquer successivement sur une lentille ophtalmique (ou encore appelée substrat) un revêtement primaire, un revêtement anti-abrasion et un revêtement anti-reflets.

Le revêtement primaire permet d'améliorer la résistance aux chocs des couches ultérieures dans le produit final. Il permet en outre d'assurer une bonne adhérence du revêtement anti-abrasion au substrat. Dans la présente invention, les compositions de primaire sont à base de latex de polyuréthane.

Le revêtement anti-abrasion, comme son nom l'indique, a pour fonction de protéger la lentille ophtalmique des rayures et de l'abrasion.

Le revêtement anti-reflets permet d'améliorer les propriétés anti-réfléchissantes de l'article optique final. Il permet de réduire la réflexion de la lumière à l'interface article-air sur une portion relativement large du spectre visible.

Sauf indication contraire, les indices de réfraction auxquels il est fait référence dans la présente invention sont exprimés à 25 °C pour une longueur d'onde de 550 nm.

Un des problèmes rencontrés avec les revêtements anti-reflets est leur fragilité lors des étapes de débordage et de montage des verres dans les montures de lunettes. Le système de revêtement primaire/anti-abrasion/anti-reflets subit alors de fortes contraintes mécaniques, entraînant la déformation jusqu'à la fissuration des couches antireflets. Selon l'empilement, la fissure pourra se propager dans le revêtement anti-abrasion, voire dans le revêtement primaire.

La présente invention a pour objectif d'améliorer la résistance aux fissures des divers revêtements appliqués sur la lentille ophtalmique, et en particulier du revêtement anti-reflets, lorsque la lentille subit de fortes contraintes mécaniques, comme par exemple lors des étapes de débordage et de montage des verres dans les montures de lunettes.

Cet objectif est atteint en modifiant la composition du revêtement primaire.

Les inventeurs ont en effet découvert que lorsque de la silice particulaire est incorporée dans le revêtement primaire à base de polyuréthane, le revêtement anti-reflets devient plus résistant à la formation de fissures lors de fortes contraintes mécaniques. Un état de l'art pertinent est divulgué par le document WO2008/062142.

La présente invention a ainsi pour objet un article optique selon la revendication 1.

Comme montré dans les exemples décrits ci-après, la présence d'au moins 20% en poids de silice particulaire dans le revêtement primaire sec permet d'obtenir un gain à la résistance aux fissures du revêtement anti-reflets évalué selon le test décrit ci-après, d'au moins 10%, en moyenne de 15%, voire même jusqu'à 28%, par rapport au même revêtement sans silice.

Par ailleurs, la présence de silice particulaire dans le revêtement primaire n'altère ni l'adhérence ni la résistance à l'abrasion du revêtement anti-abrasion.

Les inventeurs ont observé que la résistance aux chocs du revêtement anti-reflets pouvait diminuer à mesure que l'on augmente la quantité de silice particulaire dans le revêtement de primaire. Le meilleur compromis de performances entre la résistance aux fissures du revêtement anti-reflets et la résistance aux chocs selon le test de la chute de bille (CBI), décrit ci-après, peut être obtenu avec un pourcentage massique de silice particulaire de préférence compris entre 45% et 55% par rapport à la masse de revêtement sec.

L'expression «revêtement primaire déposé sur au moins l'une des deux faces principales du substrat» signifie que le revêtement primaire (i) est positionné sur au moins l'une des deux faces du substrat, (ii) n'est pas nécessairement en contact avec le substrat, c'est-à-dire qu'un ou plusieurs revêtements intermédiaires peuvent être disposés entre le substrat et le revêtement primaire, et (iii) ne recouvre pas nécessairement le substrat complètement, le recouvrement complet étant toutefois préférentiel.

L'expression «revêtement anti-abrasion déposé sur le revêtement primaire» signifie que le revêtement anti-abrasion (i) est positionné sur la surface découverte du revêtement primaire, c'est-à-dire la face la plus éloignée du substrat, (ii) n'est pas nécessairement en contact avec revêtement primaire, c'est-à-dire qu'un ou plusieurs revêtements intermédiaires peuvent être disposés entre le revêtement primaire et le revêtement anti-abrasion, et (iii) ne recouvre pas nécessairement le revêtement primaire complètement, le recouvrement complet étant toutefois préférentiel.

De la même manière, l'expression «revêtement anti-reflets déposé sur le revêtement anti-abrasion» signifie que le revêtement anti-reflets (i) est positionné sur la surface découverte du revêtement anti-abrasion, c'est-à-dire la face la plus éloignée du substrat, (ii) n'est pas nécessairement en contact avec revêtement anti-abrasion, c'est-à-dire qu'un ou plusieurs revêtements intermédiaires peuvent être disposés entre le revêtement anti-abrasion et le revêtement

2

anti-reflets, et (iii) ne recouvre pas nécessairement le revêtement anti-abrasion complètement, le recouvrement complet étant toutefois préférentiel.

Le substrat transparent en verre organique de l'article optique de la présente invention peut être n'importe quel substrat couramment utilisé dans le domaine de l'optique, et en particulier dans le domaine ophtalmique. Il est par exemple composé d'une matière plastique thermoplastique ou thermodurcissable.

On peut citer à titre d'exemples les substrats en polycarbonate, en polyamide, en polyimide, en polysulfone, en copolymères de poly(éthylène téréphtalate) et de polycarbonate, en polyoléfines, notamment en polynorbornène, en homopolymères et copolymères de diéthylèneglycol bis(allylcarbonate), en polymères et copolymères (méth)acryliques notamment polymères et copolymères (méth)acryliques dérivés de bisphenol-A, en polymères et copolymères thio(méth)acryliques, en polyuréthane et polythiouréthane homopolymères ou copolymères, polymères et copolymères époxy et polymères et copolymères épisulfide.

Par exemple, on pourra utiliser un copolymère de diéthylèneglycol bis(allylcarbonate) tel que le CR39®, notamment d'indice de réfraction 1.5, vendu par la société PPG Industries, ou bien un polythiouréthane tel que le MR7®, notamment d'indice de réfraction 1.66, vendu par la société Mitsui Toatsu.

Le substrat en verre organique a de préférence un indice de réfraction de 1.5. Toutefois, un substrat d'indice de réfraction différent de 1,5 peut également être utilisé dans la présente invention en employant une lame quart d'onde tel que décrite dans la demande WO 03/056366.

Le substrat organique peut être soumis, avant application ou mise en contact avec la couche d'adhésif, à un traitement de surface physique, par exemple de type corona ou plasma, ou chimique, généralement destiné à améliorer l'adhérence.

Le revêtement primaire déposé sur au moins l'une de deux faces principales du substrat comprend du polyuréthane et de la silice particulaire.

On entend par silice particulaire de la silice qui se présente sous forme de particules individualisées essentiellement non agglomérées entre elles. Typiquement, la silice particulaire selon la présente invention provient de dispersions de silice colloïdale disponibles dans le commerce.

Le revêtement primaire peut être déposé sur le substrat de la manière suivante :

- (1) sur le substrat, application d'une composition liquide primaire comprenant un latex de polyuréthane et de la silice particulaire;
- (2) séchage du substrat obtenu à l'étape (1) à une température comprise entre 50 °C et 150 °C, de préférence entre 70 °C et 110°C, pendant une durée comprise entre 2 minutes et 4 heures, de préférence entre 10 minutes et 3,5 heures.

Après l'étape de séchage, l'épaisseur du revêtement primaire est comprise entre 0,2 et 2,5 $\mu$m, de préférence entre 0,5 et 1 ,5 $\mu$m, encore plus préférentiellement entre 0,5 et 1 $\mu$m.

A l'étape (1), la composition primaire peut être déposée sur la surface du substrat par toute technique appropriée, par exemple par trempage, centrifugation, pulvérisation, arrosage ou application à la brosse ou au rouleau, de préférence par trempage.

L'étape (2) de séchage peut être réalisée en deux phases : une phase de pré-cuisson à une température comprise entre 70 et 80°C, de préférence à environ 75°C, pendant une durée comprise entre 10 et 20 minutes, de préférence environ 15 minutes, suivie d'une phase de polymérisation à une température comprise entre 90 et 110°C, de préférence à environ 100°C, pendant une durée comprise entre 2,5 heures et 3,5 heures, de préférence environ 3 heures.

On entend par revêtement sec le revêtement obtenu après séchage ou cuisson.

Le pourcentage massique de polyuréthane dans le revêtement primaire sec est compris entre 45 et 55 % par rapport à la masse de revêtement sec.

Le pourcentage massique de silice particulaire dans le revêtement primaire sec est compris entre 45 et 55 % par rapport à la masse de revêtement sec.

Le rapport massique entre la silice particulaire et le polyuréthane dans le revêtement primaire sec peut être ainsi compris entre 0,9 et 1,1.

Le pourcentage volumique de polyuréthane dans le revêtement primaire sec est de préférence compris entre 50 et 90 %, de préférence entre 60 et 80 %, plus préférentiellement entre 65 et 75 % par rapport au volume de revêtement sec.

Le pourcentage volumique de silice particulaire dans le revêtement primaire sec est de préférence compris entre 10 et 50 %, de préférence entre 20 et 40 %, entre 10 et 35 % ou entre 12 et 35 %, plus préférentiellement entre 25 et 35% ou bien entre 12 et 15 % par rapport au volume de revêtement sec.

Le rapport volumique entre la silice particulaire et le polyuréthane dans le revêtement primaire sec peut être ainsi compris entre 0,1 et 1,0, de préférence entre 0,25 et 0,70, plus préférentiellement entre 0,35 et 0,50.

L'épaisseur du revêtement primaire sec est comprise entre 0,2 et 2,5 $\mu$m, de préférence entre 0,5 et 1,5 $\mu$m, encore plus préférentiellement entre 0,5 et 1 $\mu$m.

Dans le revêtement primaire sec, la silice colloïdale présente de préférence une taille moyenne de particules comprise entre 5 nm et 50 nm, plus préférentiellement entre 5 nm et 15 nm, encore plus préférentiellement entre 7 nm et 12 nm. La taille des particules est typiquement déterminée par microscopie électronique en transmission (MET).

La composition liquide primaire comprend en milieu aqueux du polyuréthane sous forme de dispersion et de la silice colloïdale. Le milieu aqueux comprend majoritairement de l'eau, par exemple de l'eau distillée ou de l'eau déionisée, mais peut aussi comprendre en faible quantité un ou plusieurs solvants provenant par exemple des latex de polyuréthane ou des silices colloïdales qui sont utilisées pour préparer la composition primaire liquide.

Comme indiqué ci-dessus, la taille moyenne des particules est de préférence comprise entre 5 nm et 50 nm, plus préférentiellement entre 5 nm et 15 nm, encore plus préférentiellement entre 7 nm et 12 nm. Lorsque la silice est sous forme de dispersion, la taille des particules de silice est typiquement mesurée par granulométrie laser.

La teneur en solides de la composition liquide primaire est de préférence comprise entre 13 et 20 % en poids.

Le pourcentage massique de silice dans la composition primaire peut être compris entre 3 et 14 %, ou encore entre 6% et 11 %.

Le pourcentage massique de polyuréthane dans la composition primaire peut être compris entre 6 et 17 %, ou encore entre 9 % et 14 %.

De préférence, le pourcentage massique de polyuréthane dans la composition primaire est supérieur ou égal à 6%, encore plus préférentiellement supérieur ou égal à 7%.

La composition primaire peut comprendre en outre un tensio-actif.

Le polyuréthane de la composition primaire est choisi parmi les latex de polyuréthane.

Au sens de la présente invention, un latex est une dispersion dans un milieu aqueux de particules de polymère ou de copolymère. Le milieu aqueux peut être de l'eau, par exemple de l'eau distillée ou de l'eau déionisée, ou encore un mélange d'eau et d'un ou plusieurs solvants, notamment d'eau et d'alcanol, généralement un alcanol en $C_1$ à $C_6$, et de préférence l'éthanol.

Dans la présente invention, le terme « polyuréthane » englobe à la fois les (co)polymères de polyuréthane proprement dits, c'est-à-dire les polymères obtenus par condensation d'au moins un polyisocyanate et d'au moins un polyol et éventuellement d'un prolongateur de chaîne, et les polyuréthane-urée, c'est-à-dire les (co)polymères obtenus par condensation d'au moins un polyisocyanate et d'au moins d'une polyamine et éventuellement d'un prolongateur de chaîne, et des mélanges de ceux-ci.

Les polyuréthanes et leur mode de préparation sont décrits entre autres, dans les brevets US 6,187,444 et US 5,316,791.

De préférence, les polyuréthanes de l'invention ne comportent pas de fonctions acryliques ou méthacryliques, et en particulier pas de fonction acrylique ou méthacrylique polymérisable.

Le latex de polyuréthane peut comprendre également une faible proportion, jusqu'à 10% en poids de la composition, d'un latex (méth)acrylique, de préférence d'un latex acrylique, tel que décrit dans la demande WO 00/08493. De préférence, la proportion en poids de latex (méth)acrylique varie de 0,1 à 10% en poids et mieux de 2 à 6% en poids par rapport au poids total de la composition de latex. La proportion en poids d'extrait sec du latex acrylique par rapport au poids total d'extrait sec de la composition varie également de préférence de 0,1 à 10% en poids, et mieux de 2 à 6% en poids. La présence de latex (méth)acrylique a pour avantage, d'une part de diminuer le caractère hydrophile du matériau et d'autre part de rendre la couche finale sèche plus rigide et de réduire son allongement à la rupture. Ces latex (méth)acryliques sont disponibles dans le commerce notamment auprès de la société SYNTRON sous les dénominations PROXAM 185 RS® (résine acrylique), PROXAM 157® (copolymère acrylique), PROXAM N 360® (copolymère acrylique).

Le latex de polyuréthane peut également comprendre une faible proportion, jusqu'à 10% en poids de la composition, de latex contenant des motifs butadiène, tels que ceux décrits dans la demande WO 99/26089.

Les latex de polyuréthane convenant pour la présente invention sont disponibles dans le commerce, par exemple auprès de la société BAXENDEN sous les dénominations W 234 et W 240 (polyuréthane-urée) ou sous la dénomination Pellimer TC® (polyuréthane-urée) auprès de la société SOCOMOR et PROXR 910® (polyuréthane) auprès de la société SYNTRON.

La composition primaire comprend de préférence un latex de polyuréthane vendu par la société BAXENDEN sous la dénomination W 234. Ce latex est une dispersion de polyuréthane de type aliphatique polyester anionique dépourvu d'isocyanate libre. Son pH à 25°C est compris entre 7,5 et 9,2. Sa teneur en solides est comprise entre 29 et 31%. Sa viscosité à 25°C est de 100cps. Sa densité à 25°C est de 1,05.

Les compositions de latex de polyuréthane selon l'invention peuvent bien évidemment être des mélanges de latex de polyuréthane, en particulier des latex de polyuréthane du commerce.

Comme mentionné précédemment, la silice particulaire incorporée dans la composition primaire est de préférence une silice colloïdale, c'est-à-dire une silice sous forme de fines particules en suspension dans un milieu liquide, de préférence aqueux.

Ces suspensions aqueuses de silice colloïdale comprennent ou sont constituées de fines particules individualisées de silice, non liées entre elles par des liaisons siloxanes, en suspension dans de l'eau et sont de préférence substantiellement dépourvues d'agrégats de particules.

La taille moyenne des particules de silice est de préférence comprise entre 5 nm et 50 nm, plus préférentiellement entre 5 nm et 15 nm, encore plus préférentiellement entre 7 nm et 12 nm. La surface des particules de silice peut être chargée positivement ou négativement, de préférence négativement lorsque notamment le polyuréthane est de type anionique. En outre, la surface des particules de silice peut être modifiée par greffage de groupements fonctionnels, tels que des groupements amine, thiol ou époxy.

De préférence, la silice colloïdale est de pH basique compris entre 7 et 11, encore plus préférentiellement entre 8 et 10.

La silice colloïdale qui est incorporée dans la composition primaire peut comprendre entre 20 et 50% en poids de silice, de préférence entre 25 et 35% en poids de silice.

La silice colloïdale convenant pour la préparation de la composition primaire selon l'invention est disponible dans le commerce, par exemple auprès de la société JGC sous la dénomination CATALOID SI30, auprès de la société EKA CHEMICALS sous la dénomination BINDZIL CC40, ou bien encore auprès de la société GRACE DAVISON sous la dénomination LUDOX SM 30.

La composition primaire peut être préparée en mélangeant sous agitation le polyuréthane sous forme de dispersion aqueuse avec la silice colloïdale et l'eau distillée ou déionisée.

Le rapport volumique de la silice colloïdale sur la dispersion de polyuréthane est déterminé de manière à atteindre la teneur en solides désirée.

Le tensio-actif peut être incorporé à la composition avant d'effectuer le mélange polyuréthane/silice ou bien après avoir effectué le mélange.

Selon la présente invention, un revêtement anti-abrasion est déposé sur le revêtement primaire. Le revêtement anti-abrasion peut être toute couche classiquement utilisée comme revêtement anti-abrasion dans le domaine des lentilles ophtalmiques.

Les revêtements durs anti-abrasion et/ou anti-rayures sont de préférence élaborés à partir de compositions comprenant au moins un alcoxysilane et/ou un hydrolysat de celui-ci, obtenu par exemple par hydrolyse avec une solution d'acide chlorhydrique. Après l'étape d'hydrolyse, dont la durée est généralement comprise entre 2h et 24h, préférentiellement entre 2h et 6h, des catalyseurs peuvent optionnellement être ajoutés. Un composé tensioactif est de préférence également ajouté afin de favoriser la qualité optique du dépôt.

Parmi les revêtements recommandés dans la présente invention, on peut citer les revêtements à base d'hydrolysats d'époxysilanes tels que ceux décrits dans les brevets EP 0614957, US 4,211,823 et US 5,015,523.

Une composition pour revêtement anti-abrasion préférée est celle divulguée dans le brevet FR 2702486, au nom du déposant. Elle comprend un hydrolysat d'époxy trialcoxysilane et de dialkyl dialcoxysilane, de la silice colloïdale et une quantité catalytique de catalyseur de durcissement à base d'aluminium tel que l'acétylacétonate d'aluminium, le reste étant essentiellement constitué par des solvants classiquement utilisés pour la formulation de telles compositions. Préférentiellement l'hydrolysat utilisé est un hydrolysat de γ-glycidoxypropyltriméthoxysilane (GLYMO) et de diméthyldiéthoxysilane (DMDES), ou bien un hydrolysat de γ-glycidoxypropyltriméthoxysilane (GLYMO) et de triéthylorthosilicate (TEOS).

La composition de revêtement anti-abrasion peut être déposée sur la surface libre du revêtement primaire par toute technique appropriée, par exemple par trempage, centrifugation, pulvérisation, arrosage ou application à la brosse ou au rouleau, de préférence par trempage ou centrifugation. Elle est ensuite durcie par la voie appropriée (de préférence thermique ou rayonnements UV).

L'épaisseur du revêtement anti-abrasion varie généralement de 2 à 10 $\mu$m, préférentiellement de 3 à 5 $\mu$m.

Selon la présente invention, un revêtement anti-reflets est déposé sur le revêtement anti-abrasion.

Les revêtements anti-reflets sont bien connus et comprennent classiquement un empilement monocouche ou multicouches de matériaux diélectriques tels que SiO, SiO2, Al2O3, MgF2, LiF, Si3N4, TiO2, ZrO2, Nb2O5, Y2O3, HfO2, Sc2O3, Ta2O5, Pr2O3, ou leurs mélanges.

Comme cela est bien connu également, les revêtements anti-reflets sont, de préférence, des revêtements multicouches comprenant alternativement des couches de haut indice de réfraction et des couches de bas indice de réfraction.

Dans la présente demande, une couche de l'empilement multicouches du revêtement anti-reflets (AR) est dite couche de haut indice de réfraction (HI) lorsque son indice de réfraction est supérieur ou égal à 1,6, de préférence supérieur ou égal à 1,7, mieux supérieur ou égal à 1,8 et encore mieux supérieur ou égal à 1,9. Une couche de l'empilement multicouches du revêtement anti-reflets est dite couche de bas indice de réfraction (BI) lorsque son indice de réfraction est inférieur ou égal à 1,54, de préférence inférieur ou égal à 1,52, mieux inférieur ou égal à 1,50.

Les revêtements anti-reflets convenant pour l'invention sont par exemple les revêtements Crizal Alizé ®, Crizal Forte ® commercialisés par la société demanderesse et décrits dans les demandes WO 2004/111691 et WO 2008/107325.

Les différentes couches de l'empilement multicouches sont préférentiellement déposées par dépôt sous vide selon l'une des techniques suivantes : i) par évaporation, éventuellement assistée par faisceau ionique ; ii) par pulvérisation par faisceau d'ion ; iii) par pulvérisation cathodique ; iv) par dépôt chimique en phase vapeur assisté par plasma. Ces différentes techniques sont décrites dans les ouvrages "Thin Film Processes" and "Thin Film Processes II," Vossen & Kern, Ed., Académie Press, 1978 et 1991 respectivement. Une technique particulièrement recommandée est la technique d'évaporation sous vide.

Généralement, les couches HI ont une épaisseur variant de 10 nm à 120 nm, et les couches BI ont une épaisseur physique variant de 10 nm à 100 nm.

Préférentiellement, l'épaisseur totale du revêtement anti-reflets est inférieure à 1 μm, mieux inférieure ou égale à 500 nm et mieux encore inférieure ou égale à 250 nm. L'épaisseur totale du revêtement anti-reflets est généralement supérieure à 100 nm, de préférence supérieure à 150 nm.

La présente invention a également pour objet un procédé de fabrication d'un article optique, de préférence une lentille ophtalmique, comprenant les étapes suivantes :

(1) fournir un substrat transparent en verre organique comportant deux faces principales ;
(2) déposer sur l'une au moins des deux faces principales une couche d'une composition liquide primaire comprenant une dispersion de polyuréthane et de la silice colloïdale, puis durcir ladite composition primaire de manière à obtenir un revêtement primaire tel que le pourcentage massique de silice particulaire dans le revêtement primaire sec est compris entre 45 et 55 % par rapport à la masse de revêtement sec et tel que le pourcentage massique de polyuréthane dans le revêtement primaire sec est compris entre 45 et 55 % par rapport à la masse de revêtement sec;
(3) déposer sur le revêtement primaire un revêtement anti-abrasion;
(4) déposer sur le revêtement anti-abrasion un revêtement anti-reflets.

L'article optique selon la présente invention présente de préférence un indice de réfraction de 1,5.

La présente invention a également pour objet l'utilisation de silice particulaire dans un article optique comprenant, dans l'ordre suivant en partant du substrat :

(a) un substrat transparent en verre organique comportant deux faces principales,
(b) un revêtement primaire comprenant du polyuréthane, déposé sur au moins l'une des deux faces principales du substrat en verre, le pourcentage massique de polyuréthane dans le revêtement primaire sec étant compris entre 45 et 55 % par rapport à la masse de revêtement sec,
(c) un revêtement anti-abrasion déposé sur le revêtement primaire, et
(d) un revêtement anti-reflets déposé sur le revêtement anti-abrasion,

pour augmenter la résistance aux fissures du revêtement anti-reflets lorsque ledit article optique subit des contraintes mécaniques,
caractérisée en ce que ladite silice particulaire est introduite dans ledit revêtement primaire de manière telle que le pourcentage massique de silice particulaire dans le revêtement primaire sec est compris entre 45 et 55 % par rapport à la masse de revêtement.

Dans la présente invention, la résistance du revêtement anti-reflets aux fissures lors d'une forte contrainte mécanique est évaluée de la façon suivante.

On applique, à température ambiante, une charge compressive de 50 daN au centre de la lentille pendant 10 secondes. Après examen de la surface de la lentille à la recherche d'éventuelles craquelures, on recommence l'application d'une charge compressive d'une valeur nominale supérieure de 5 daN à celle appliquée précédemment. Ce cycle est répété jusqu'à apparition de craquelures dans le revêtement anti-reflets. La charge critique est la charge la plus basse pour laquelle des craquelures ont été observées.

Le gain à la résistance aux fissures du revêtement anti-reflets de l'article testé par rapport à un article de référence est calculé selon la formule suivante :

Gain = (charge critique de l'article testé –charge critique de l'article de référence) / charge critique de l'article de référence.

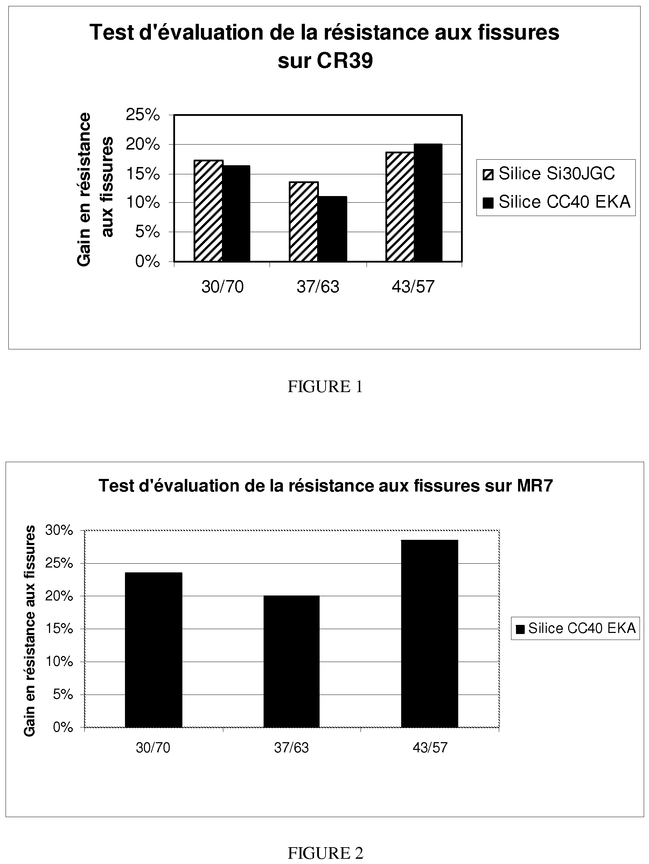

La figure 1 représente le gain en résistance aux fissures d'un revêtement anti-reflets, déposé sur un revêtement anti-abrasion (3,5μm), lui-même déposé sur un revêtement primaire (0,8μm) comprenant du polyuréthane et de la silice particulaire CATALOID Si30 ® ou Bindzil CC40®), lui-même déposé sur un substrat en CR39®, en fonction du rapport entre les proportions volumiques silice/polyuréthane dans le revêtement primaire sec.

La figure 2 représente le gain en résistance aux fissures d'un revêtement anti-reflets, déposé sur un revêtement anti-abrasion (3,5μm), lui-même déposé sur un revêtement primaire (0,8μm) comprenant du polyuréthane et de la silice particulaire (Bindzil CC40®), lui-même déposé sur un substrat en MR7®, en fonction du rapport entre les proportions volumiques silice/polyuréthane dans le revêtement primaire sec.

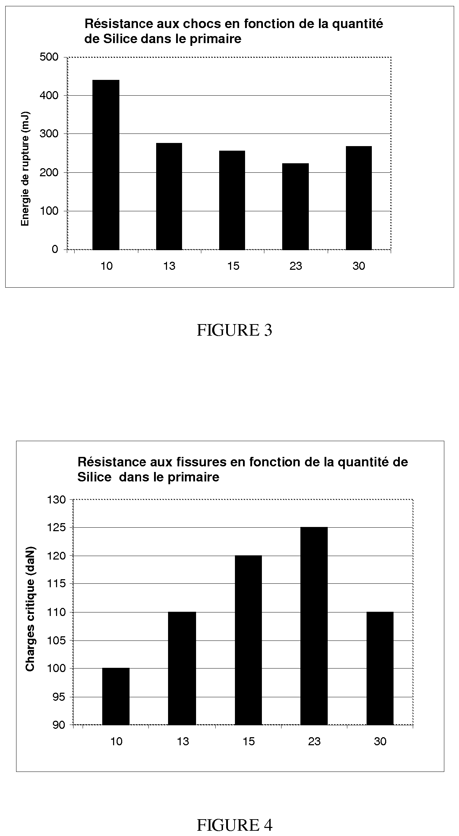

La figure 3 représente la résistance aux chocs du revêtement anti-reflets en fonction de la proportion de silice particulaire dans le revêtement de primaire (substrat : CR39 ; revêtement primaire comprenant du polyuréthane et de la silice particulaire CATALOID Si30 ®; couche anti-abrasion à matrice polysiloxane comportant de la silice colloïdale ; couche anti-reflets : revêtement proche du Crizal Alizé ® avec présence supplémentaire d'une couche antistatique ITO). La figure 4 représente la résistance aux fissures du revêtement anti-reflets en fonction de la proportion de silice particulaire dans le revêtement de primaire (substrat : MR7; revêtement primaire comprenant du polyuréthane et de la silice particulaire CATALOID Si30 ®; couche anti-abrasion à matrice polysiloxane comportant de la silice colloïdale ; couche anti-reflets : Crizal Forte®).

Exemples

1) Résistance aux fissures

1.1) Préparation de la composition primaire

Une composition primaire est préparée à partir des ingrédients suivants et dans les proportions suivantes :

|  | Dénomination | Teneur en solides (% en poids) | % massique |
|---|---|---|---|
| silice colloïdale | CATALOID Si30 ® (fournisseur : JCG) Taille moyenne de particules : 12 nm | 30% | 29,6 |
| dispersion aqueuse de polyuréthane | Dilution de W234 ® (fournisseur :BAXENDEN CHEMICALS) | 15% | 65,8 |
| tensio-actif | L77 ® (fournisseur : GROLMAN) | 100% | 0,5 |
| Eau distillée | - |  | 4,1 |

La moitié de l'eau distillée est ajoutée à la silice colloïdale et le mélange est agité pendant 30 minutes. La dispersion de latex est ajoutée à ce mélange lentement, puis le tensio-actif et la deuxième moitié de l'eau sont ajoutés. La composition est agitée pendant 1 heure, puis stockée à température 5°C.

Dans le revêtement sec, le rapport volumique de la silice colloïdale sur la dispersion de polyuréthane est de 30/70.

Selon le même mode opératoire, et à partir des mêmes ingrédients, on prépare deux autres compositions de primaire qui diffèrent de la composition décrite ci-dessus uniquement en ce que le rapport volumique de la silice colloïdale sur la dispersion de polyuréthane dans le revêtement sec est respectivement de 37/63 et 43/57.

Selon le même protocole, on prépare trois autres compositions de primaire qui diffèrent des trois précédentes uniquement en ce que la silice colloïdale CATALOID Si30 ® est remplacée par une silice de dénomination Bindzil CC40® (fournisseur : EKA CHEMICALS) de taille moyenne de particules : 12 nm.

1.2) Préparation de lentilles ophtalmiques selon l'invention

Etape (A) - Substrat

On utilise deux types de verres organiques

(a) un verre en diéthylèneglycol bis(allylcarbonate) ayant un indice de réfraction de 1.5, résine commercialisée par PPG sous la dénomination CR39® .

(b) un verre en polythiouréthane ayant un indice de réfraction de 1,66, résine commercialisée par Mitsui sous la dénomination MR7®.

Tous les verres sont soumis à un traitement chimique de surface.

Chaque lot de verre est séparé en deux séries, l'une destinée à recevoir, conformément à l'invention, un revêtement primaire à base de polyuréthane et de silice particulaire couvert d'un revêtement anti-abrasion et d'un revêtement anti-reflets, et l'autre destinée à recevoir le même revêtement à base de polyuréthane mais sans silice, le même revêtement anti-abrasion et le même revêtement anti-reflets (verres comparatifs selon l'état de la technique).

Etape (B) - Dépôt d'un revêtement primaire

On dépose par immersion (*dip coating*) le revêtement primaire sur les deux surfaces du verre à une épaisseur d'environ 0,8 μm. Cette couche est ensuite soumise à un séchage pendant 15 minutes à 75 °C.

Etape (C) - Dépôt d'un revêtement anti-abrasion

On dépose sur les deux des surfaces du revêtement primaire par immersion (*dip coating*) une solution thermodurcissable pour revêtement anti-abrasion (comprenant, par rapport au poids total de la composition, 22% de glycidoxypropylmethyldimethoxysilane, 62% de silice colloïdale contenue à 30% dans du méthanol, et 0,70% d'aluminium acétylacétonate) en une épaisseur d'environ 3,5 μm. Cette couche est ensuite soumise à une réticulation par chauffage pendant 3 heures à 100 °C. La solution thermodurcissable et le procédé d'obtention du revêtement anti-abrasion sont décrits à l'exemple 3 du brevet EP 0614957B1.

Etape (D) - Dépôt d'un revêtement anti-reflets multicouche

On dépose à la surface du revêtement anti-abrasion un revêtement anti-reflets Crizal Alizé® lequel est notamment décrit dans la demande de brevet WO 2004/111691.

1.3) Préparation de lentilles ophtalmiques comparatives

On dépose sur les substrats décrits ci-dessus (en CR39 et MR7®), par immersion (*dip coating*) successivement un revêtement primaire, un revêtement anti-abrasion et un revêtement anti-reflets dans des conditions strictement identiques à celles utilisées pour les lentilles selon l'invention, de façon à ce que les lentilles comparatives diffèrent des lentilles selon l'invention uniquement par les pourcentages massiques en silice et en polyuréthane dans le revêtement primaire sec.

1.4) Test d'évaluation de la résistance du revêtement anti-reflets aux fissures lors d'une forte contrainte mécanique

1.4.1) Méthode :

On applique, à température ambiante, une charge compressive de 50 daN au centre de la lentille pendant 10 secondes. Après examen de la surface de la lentille à la recherche d'éventuelles craquelures, on recommence l'application d'une charge compressive d'une valeur nominale supérieure de 5 daN à celle appliquée précédemment. Ce cycle est répété jusqu'à apparition de craquelures dans le revêtement anti-reflets. La charge critique est la charge la plus basse pour laquelle des craquelures ont été observées.

Pour la charge critique, 6 verres sont testés pour la moyenne indiquée ci-dessous. Les différences obtenues sont significativement supérieures à l'incertitude de reproductibilité du test.

1.4.2) Résultats :

Les résultats du test réalisé sur une lentille ophtalmique avec substrat en CR39® et revêtement anti-reflets Crizal Alizé® sont indiqués dans le tableau 1:

Tableau 1

| Substrat | Revêtement primaire | | Charge critique (daN) | Gain en résistance par rapport à la référence |
|---|---|---|---|---|
| | Silice colloïdale | Rapport entre les proportions volumiques silice/polyuréthane dans le revêtement primaire sec | | |
| CR39 | Référence (sans silice) | | 156 | - |

(suite)

| | | Revêtement primaire | | Charge critique (daN) | Gain en résistance par rapport à la référence |
|---|---|---|---|---|---|
| Substrat | Silice colloïdale | Rapport entre les proportions volumiques silice/polyuréthane dans le revêtement primaire sec | | | |
| CR39 | CATALOID Si30 ® | 30/70* | | 183 | 17% |
| CR39 | CATALOID Si30 ® | 37/63 | | 177 | 13 % |
| CR39 | CATALOID Si30 ® | 43/57 | | 185 | 19% |
| CR39 | Référence (sans silice) | | | 135 | - |
| CR39 | Bindzil CC40® | 30/70* | | 157 | 16% |
| CR39 | Bindzil CC40® | 37/63 | | 150 | 11% |
| CR39 | Bindzil CC40® | 43/57 | | 162 | 20% |
| **\* : proportion donnant un article optique selon l'invention** | | | | | |

Les résultats du tableau 1 sont représentés sur la figure 1.

Avec un substrat CR 39 et un revêtement anti-reflets Crizal Alizé® , on constate que le remplacement de 30%, 37% ou 43% en volume du polyuréthane par de la silice particulaire provenant de la silice colloïdale CATALOID Si30 ®dans le revêtement primaire sec conduit respectivement à un gain en résistance aux fissures du revêtement anti-reflets de 17%, 13 % et 19%.

Avec un substrat CR 39 et un revêtement anti-reflets Crizal Alizé®, on constate que le remplacement de 30%, 37% ou 43% en volume de polyuréthane par de la silice particulaire provenant de la silice colloïdale Bindzil CC40® dans le revêtement primaire sec conduit respectivement à un gain en résistance aux fissures du revêtement anti-reflets de 16%, 11 % et 20 %.

Par ailleurs, la présence de silice particulaire dans le revêtement primaire n'altère ni l'adhérence ni la résistance à l'abrasion du revêtement anti-abrasion.

Les résultats du test réalisé sur une lentille ophtalmique avec substrat en MR7® et revêtement anti-reflets Crizal Alizé® sont indiqués dans le tableau 2:

Tableau 2

| | | Revêtement primaire | | Charge critique (daN) | Gain en résistance par rapport à la référence |
|---|---|---|---|---|---|
| Substrat | Silice colloïdale | Rapport entre les proportions volumiques silice/polyuréthane dans le revêtement primaire sec | | | |
| MR7 | Référence (sans silice) | | | 140 | - |
| MR7 | Bindzil CC40® | 30/70* | | 173 | 24% |
| MR7 | Bindzil CC40® | 37/63 | | 168 | 20% |
| MR7 | Bindzil CC40® | 43/57 | | 180 | 29% |
| **\* : proportion donnant un article optique selon l'invention** | | | | | |

Les résultats du tableau 2 sont représentés sur la figure 2.

Avec un substrat MR7® et un revêtement anti-reflets Crizal Alizé®, on constate que le remplacement de 30%, 37% ou 43% en volume de polyuréthane par de la silice particulaire provenant de la silice colloïdale Bindzil CC40® dans le revêtement primaire sec conduit respectivement à un gain en résistance aux fissures du revêtement anti-reflets de 24%, 20 % et 37 %.

Par ailleurs, la présence de silice particulaire dans le revêtement primaire n'altère ni l'adhérence ni la résistance à l'abrasion du revêtement anti-abrasion.

Ces résultats confirment donc que l'ajout de silice colloïdale dans le revêtement primaire permet d'augmenter la résistance du revêtement anti-reflets aux fissures lorsque l'article optique est soumis à des contraintes mécaniques, sans altérer l'adhérence ou la résistance à l'abrasion du revêtement anti-abrasion.

2) Résistance aux chocs

2. 1) Méthode :

On évalue la résistance aux chocs des lentilles selon la norme ANSI Standard Z 80.1 - 1987, par chute d'un impacteur au centre de la face convexe de chaque verre. Ce test est communément appelé test de la chute de bille (CBI). L'évolution de l'accélération de l'impacteur lors du contact avec le verre permet de déterminer l'énergie de rupture du verre. Pour chaque série de verres (n = 20 - 40), on détermine l'énergie moyenne de rupture (ERmoy en mJ) et l'énergie minimale de rupture (ERmini).

La limite minimale de conformité FDA (Administration Fédérale Américaine des produits alimentaires et médicamenteux : Food and Drug Administration) se situe à une valeur d'énergie de rupture égale à 200mJ.

2. 1) Résultats :

La lentille testée comprend sur chacune de ses deux faces (avant et arrière) en partant du substrat : un revêtement de primaire comprenant du polyuréthane et de la silice particulaire CATALOID Si30 ®, une couche anti-abrasion à matrice polysiloxane comportant de la silice colloïdale et une couche anti-reflets. Les échantillons utilisés ont été produits de la manière décrite au point 1.2 ci dessus pour les étapes A) à C). Selon les échantillons, et uniquement lorsque cela est mentionné, l'étape D) a été remplacée par une étape D') dans laquelle une couche antistatique en oxyde d'étain et d'indium (ITO) est déposée dans l'empilement anti-reflet. Sinon, l'étape D a été respectée.

Les résultats du test CBI réalisé sur une lentille ophtalmique avec substrat en CR39® ou MR7® sont indiqués dans le tableau 3 ci-dessous.

Tableau 3

| | | Energie de rupture (mJ) à différentes proportions de silice dans le primaire | | |
|---|---|---|---|---|
| | | Rapport entre les proportions volumiques silice/polyuréthane dans le revêtement primaire sec | | |
| Substrat | Couche anti-reflet | 30/70* | 37/63 | 43/57 |
| MR7 | Crizal Alizé ® | 1500 | 1303 | 1207 |
| CR39 | Revêtement proche du Crizal Alizé ® (présence supplémentaire d'une couche antistatique ITO) | 250 | | |
| * : proportion donnant un article optique selon l'invention | | | | |

Avec un substrat MR7, on constate que la résistance aux chocs diminue si on augmente la quantité de silice particulaire dans le revêtement de primaire.

Avec un substrat CR 39, on constate qu'avec un primaire dans lequel le rapport entre les proportions volumiques silice/polyuréthane est de 30/70, l'énergie de rupture selon le test CBI est de 250 mJ, soit légèrement au dessus de la valeur minimale requise par la FDA. L'existence d'un écart de performance important entre les échantillons comportant un substrat en MR7 et ceux ayant un substrat en CR 39 est connu de l'homme du métier. En effet, l'utilisation du matériau MR7 pour former le substrat permet, à cause de ses propriétés mécaniques intrinsèques, d'obtenir une résistance aux chocs meilleure qu'en utilisant du matériau CR39.

En combinant ces deux enseignements, il semble qu'une augmentation de la quantité de silice dans un primaire utilisé sur un substrat en CR 39 conduirait à former des lentilles ophtalmiques ayant des valeurs de résistance aux chocs très proches de la limite imposée par la FDA et potentiellement inférieures. Ainsi, la composition de primaire dans laquelle le rapport entre les proportions volumiques silice/polyuréthane est de 30/70 apparaît comme optimale si l'on souhaite que la résistance aux chocs soit conforme aux normes de la FDA quelque soit le substrat (CR39 ou MR7).

3) Variation de la résistance aux chocs et aux fissures du revêtement anti-reflets en fonction de la proportion de silice particulaire présente dans le revêtement de primaire.

La figure 3 représente la résistance aux chocs du revêtement anti-reflets en fonction de la proportion de silice particulaire dans le revêtement de primaire (substrat : CR39 ; couche anti-abrasion à matrice polysiloxane comportant de la silice colloïdale ; couche anti-reflets : revêtement proche du Crizal Alizé ® avec présence supplémentaire d'une couche antistatique ITO). Les couches sont appliquées comme décrit ci-dessus au point 1.2.

On considère que la résistance aux chocs est modifiée de manière significative au dessus de 100 mJ de différence.

Conclusion : les résultats indiqués sur la figure 3 montrent que le revêtement de primaire comprenant de 13 à 23 % volumique de silice particulaire permet de conférer à la couche anti-reflets une résistance aux chocs de même ordre que celle qui comprend 30 % volumique de silice particulaire. En particulier, les échantillons dans lesquels le revêtement de primaire comprend 23 % volumique de silice particulaire dans le revêtement sec ont des performances en résistance aux chocs les plus faibles, proches de la limite FDA mais toujours supérieures à celle-ci.

La figure 4 représente la résistance aux fissures du revêtement anti-reflets en fonction de la proportion de silice particulaire dans le revêtement de primaire (substrat : MR7; couche anti-abrasion à matrice polysiloxane comportant de la silice colloïdale ; couche anti-reflets : Crizal Forte®). Les couches sont appliquées comme décrit ci-dessus au point 1.2.

Conclusion : les résultats indiqués sur la figure 4 montrent que le revêtement de primaire comprenant de 13 à 23 % volumique de silice particulaire permet de conférer à la couche anti-reflet une résistance aux fissures au moins égale à celle qui comprend 30 % volumique de silice particulaire. En particulier, les échantillons dans lesquels le revêtement de primaire comprend 15% ou 23 % volumique de silice particulaire dans le revêtement sec ont des performances en résistance aux fissures du revêtement anti-reflets supérieures à l'échantillon qui comprend 30 % volumique de silice particulaire.

En combinant ces deux analyses les inventeurs prévoient que le meilleur compromis de performances entre la résistance aux fissures du revêtement anti-reflets et la résistance aux chocs selon le test de la chute de bille (CBI), décrit ci-dessus, peut être obtenu avec un pourcentage volumique de silice particulaire compris entre 10 et 35%, plus préférentiellement entre 12 et 35 %, et en particulier entre 12 et 15 % et autour de 30%, par exemple entre 25% et 35%, par rapport au volume de revêtement sec.

## Revendications

1. Article optique comprenant, dans l'ordre suivant en partant du substrat :

 (a) un substrat transparent en verre organique comportant deux faces principales,
 (b) un revêtement primaire comprenant du polyuréthane, déposé sur au moins l'une des deux faces principales du substrat en verre,
 (c) un revêtement anti-abrasion déposé sur le revêtement primaire, et
 (d) un revêtement anti-reflets déposé sur le revêtement anti-abrasion,

 **caractérisé en ce que** le revêtement primaire comprend en outre de la silice particulaire, **en ce que** le pourcentage massique de ladite silice particulaire dans le revêtement primaire sec est compris entre 45 et 55 % par rapport à la masse de revêtement sec et **en ce que** le pourcentage massique de polyuréthane dans le revêtement primaire sec est compris entre 45 et 55 % par rapport à la masse de revêtement sec.

2. Article optique selon la revendication 1, **caractérisé en ce que** la taille moyenne des particules de silice est comprise entre 5 nm et 50 nm, de préférence entre 5 nm et 15 nm, plus préférentiellement entre 7 nm et 12 nm.

3. Article optique selon la revendication 1 ou 2, **caractérisé en ce que** le rapport massique entre la silice particulaire et le polyuréthane dans le revêtement primaire sec est compris entre 0,9 et 1,1.

4. Article optique selon l'une quelconque des revendications 1 à 3, **caractérisé en ce que** l'épaisseur du revêtement primaire est comprise entre 0,2 et 2,5 $\mu$m, de préférence entre 0,5 et 1,5 $\mu$m, encore plus préférentiellement entre 0,5 et 1 $\mu$m.

5. Article optique selon l'une quelconque des revendications 1 à 4, **caractérisé en ce qu'**il présente un indice de réfraction de 1.5.

6. Procédé de fabrication d'un article optique comprenant les étapes suivantes :

(1) fournir un substrat en verre comportant deux faces principales ;
(2) déposer sur l'une au moins des deux faces principales une couche d'une composition liquide primaire comprenant une dispersion de polyuréthane et de la silice colloïdale, puis durcir ladite composition primaire de manière à obtenir un revêtement primaire tel que le pourcentage massique de silice particulaire dans le revêtement primaire sec est compris entre 45 et 55 % par rapport à la masse de revêtement sec et tel que le pourcentage massique de polyuréthane dans le revêtement primaire sec est compris entre 45 et 55 % par rapport à la masse de revêtement sec;
(3) déposer sur le revêtement primaire un revêtement anti-abrasion;
(4) déposer sur le revêtement anti-abrasion un revêtement anti-reflets.

7. Procédé de fabrication selon la revendication 6, **caractérisé en ce que** l'étape (2) est réalisée de la manière suivante :

(a) sur le substrat, application d'une couche d'une composition liquide primaire comprenant une dispersion de polyuréthane et de la silice colloïdale;
(b) séchage du substrat obtenu à l'étape (1) à une température comprise entre 50 °C et 150 °C, de préférence entre 70 °C et 110°C, pendant une durée comprise entre 2 minutes et 4 heures, de préférence entre 10 minutes et 3,5 heures.

8. Utilisation de silice particulaire dans un article optique comprenant, dans l'ordre suivant en partant du substrat :

(a) un substrat en verre comportant deux faces principales,
(b) un revêtement primaire comprenant du polyuréthane, déposé sur au moins l'une des deux faces principales du substrat en verre, le pourcentage massique de polyuréthane dans le revêtement primaire sec étant compris entre 45 et 55 % par rapport à la masse de revêtement sec
(c) un revêtement anti-abrasion déposé sur le revêtement primaire, et
(d) un revêtement anti-reflets déposé sur le revêtement anti-abrasion,

pour augmenter la résistance aux fissures du revêtement anti-reflets lorsque ledit article optique subit des contraintes mécaniques,
**caractérisée en ce que** ladite silice particulaire est introduite dans ledit revêtement primaire de manière telle que le pourcentage massique de silice particulaire dans le revêtement primaire sec est compris entre 45 et 55 % par rapport à la masse de revêtement.


**Patentansprüche**

1. Optischer Gegenstand, welcher der Reihenfolge nach Folgendes umfasst, ausgehend vom Substrat:

(a) ein durchsichtiges Substrat aus Kunststoffglas, das zwei Hauptflächen aufweist,
(b) eine primäre Beschichtung, die Polyurethan umfasst, wobei sie auf mindestens eine der beiden Hauptflächen des Substrats aus Glas aufgebracht wurde,
(c) eine abriebhemmende Beschichtung, welche auf die primäre Beschichtung aufgebracht wurde, und
(d) eine Antireflexbeschichtung, welche auf die abriebhemmende Beschichtung aufgebracht wurde,

**dadurch gekennzeichnet, dass** die primäre Beschichtung darüber hinaus partikelförmiges Siliciumdioxid umfasst, dadurch, dass der Massenprozentanteil des partikelförmigen Siliciumdioxids in der wasserfreien primären Beschichtung um Bereich von 45 bis 55 % liegt, bezogen auf die Masse der wasserfreien Beschichtung, und dadurch, dass der Massenprozentanteil an Polyurethan in der wasserfreien primären Beschichtung im Bereich von 45 bis 55 % liegt, bezogen auf die Masse der wasserfreien Beschichtung.

2. Optischer Gegenstand nach Anspruch 1, **dadurch gekennzeichnet, dass** die mittlere Größe der Siliciumdioxidpartikel im Bereich von 5 nm bis 50 nm, vorzugsweise von 5 nm bis 15 nm, stärker bevorzugt von 7 nm bis 12 nm liegt.

3. Optischer Gegenstand nach Anspruch 1 oder 2, **dadurch gekennzeichnet, dass** das Massenverhältnis zwischen dem partikelförmigen Siliciumdioxid und dem Polyurethan in der wasserfreien primären Beschichtung im Bereich von 0,9 bis 1,1 liegt.

4. Optischer Gegenstand nach einem beliebigen der Ansprüche 1 bis 3, **dadurch gekennzeichnet, dass** die Dicke der primären Beschichtung im Bereich von 0,2, bis 2,5 $\mu$m, vorzugsweise von 0,5 bis 1,5 $\mu$m, noch stärker bevorzugt von 0,5 bis 1 $\mu$m liegt.

5. Optischer Gegenstand nach einem beliebigen der Ansprüche 1 bis 4, **dadurch gekennzeichnet, dass** er einen Brechungsindex von 1,5 aufweist.

6. Verfahren zur Herstellung eines optischen Gegenstands, das die folgenden Schritte umfasst:

(1) Bereitstellen eines durchsichtigen Substrats aus Kunststoffglas, das zwei Hauptflächen aufweist,
(2) Aufbringen einer Schicht aus einer primären flüssigen Zusammensetzung, die eine Polyurethandispersion sowie kolloidales Siliciumdioxid umfasst, auf mindestens eine der beiden Hauptflächen, woraufhin die primäre Zusammensetzung derart gehärtet wird, dass eine primäre Beschichtung derart erhalten wird, dass der Massenprozentanteil an partikelförmigem Siliciumdioxid in der primären Beschichtung im Bereich von 45 bis 55 % liegt, bezogen auf die Masse der wasserfreien Beschichtung, und dass der Massenprozentanteil an Polyurethan in der wasserfreien primären Beschichtung im Bereich von 45 bis 55 % liegt, bezogen auf die Masse der wasserfreien Beschichtung;
(3) Aufbringen einer abriebhemmenden Beschichtung auf die primäre Beschichtung;
(4) Aufbringen einer Antireflexbeschichtung auf die abriebhemmende Beschichtung.

7. Herstellungsverfahren nach Anspruch 6, **dadurch gekennzeichnet, dass** der Schritt (2) folgendermaßen durchgeführt wird:

(a) Aufbringen einer Schicht einer primären flüssigen Zusammensetzung, die eine Polyurethandispersion und kolloidales Siliciumdioxid umfasst, auf das Substrat;
(b) Trocknen des Substrats, welches in Schritt (1) erhalten wurde, bei einer Temperatur im Bereich von 50 °C bis 150 °C, vorzugsweise von 70 °C bis 110 °C, während einer Dauer im Bereich von 2 Minuten bis 4 Stunden, vorzugsweise von 10 Minuten bis 3,5 Stunden.

8. Verwendung von partikelförmigem Siliciumdioxid in einem optischen Gegenstand, welcher der Reihenfolge nach Folgendes umfasst, ausgehend vom Substrat:

(a) ein Substrat aus Glas, das zwei Hauptflächen aufweist,
(b) eine primäre Beschichtung, die Polyurethan umfasst, wobei sie auf mindestens eine der beiden Hauptflächen des Substrats aus Glas aufgebracht wurde, wobei der Massenprozentanteil an Polyurethan in der wasserfreien primären Beschichtung im Bereich von 45 bis 55 % liegt, bezogen auf die Masse an wasserfreier Beschichtung
(c) eine abriebhemmende Beschichtung, welche auf die primäre Beschichtung aufgebracht wurde, und
(d) eine Antireflexbeschichtung, welche auf die abriebhemmende Beschichtung aufgebracht wurde,

um die Beständigkeit der Antireflexbeschichtung gegen Rissbildungen zu erhöhen, wenn der optische Gegenstand mechanischen Belastungen ausgesetzt ist,
**dadurch gekennzeichnet, dass** das partikelförmige Siliciumdioxid derart in die primäre Beschichtung eingebracht wird, dass der Massenprozentanteil an partikelförmigem Siliciumdioxid in der wasserfreien primären Beschichtung im Bereich von 45 bis 55 % liegt, bezogen auf die Beschichtungsmasse.

**Claims**

1. Optical article comprising, in the following order, starting from the substrate:

(a) a transparent substrate made of organic glass comprising two main faces,
(b) a primer coating comprising polyurethane, deposited on at least one of the two main faces of the substrate made of glass,
(c) an abrasion-resistant coating deposited on the primer coating, and
(d) an antireflective coating deposited on the abrasion-resistant coating,

**characterized in that** the primer coating additionally comprises particulate silica, **in that** the percentage by weight of the said particulate silica in the dry primer coating is between 45% and 55%, with respect to the weight of dry coating, and **in that** the percentage by weight of polyurethane in the dry primer coating is between 45% and 55%, with respect to the weight of dry coating.

2. Optical article according to Claim 1, **characterized in that** the mean size of the silica particles is between 5 nm and 50 nm, preferably between 5 nm and 15 nm, more preferentially between 7 nm and 12 nm.

3. Optical article according to Claim 1 or 2, **characterized in that** the ratio by weight of the particulate silica to the polyurethane in the dry primer coating is between 0.9 and 1.1.

4. Optical article according to any one of Claims 1 to 3, **characterized in that** the thickness of the primer coating is between 0.2 and 2.5 $\mu$m, preferably between 0.5 and 1.5 $\mu$m, more preferentially still between 0.5 and 1 $\mu$m.

5. Optical article according to any one of Claims 1 to 4, **characterized in that** it exhibits a refractive index of 1.5.

6. Process for the manufacture of an optical article comprising the following stages:

   (1) providing a substrate made of glass comprising two main faces;
   (2) depositing, on at least one of the two main faces, a layer of a liquid primer composition comprising a polyurethane dispersion and colloidal silica, and then curing the said primer composition, so as to obtain a primer coating such that the percentage by weight of particulate silica in the dry primer coating is between 45% and 55%, with respect to the weight of dry coating, and such that the percentage by weight of polyurethane in the dry primer coating is between 45% and 55%, with respect to the weight of dry coating;
   (3) depositing an abrasion-resistant coating on the primer coating;
   (4) depositing an antireflective coating on the abrasion-resistant coating.

7. Manufacturing process according to Claim 6, **characterized in that** stage (2) is carried out in the following way:

   (a) on the substrate, application of a layer of a liquid primer composition comprising a polyurethane dispersion and colloidal silica;
   (b) drying the substrate obtained in stage (1) at a temperature of between 50°C and 150°C, preferably between 70°C and 110°C, for a period of time of between 2 minutes and 4 hours, preferably between 10 minutes and 3.5 hours.

8. Use of particulate silica in an optical article comprising, in the following order, starting from the substrate:

   (a) a substrate made of glass comprising two main faces,
   (b) a primer coating comprising polyurethane, deposited on at least one of the two main faces of the substrate made of glass, the percentage by weight of polyurethane in the dry primer coating being between 45% and 55%, with respect to the weight of dry coating,
   (c) an abrasion-resistant coating deposited on the primer coating, and
   (d) an antireflective coating deposited on the abrasion-resistant coating,

for enhancing the crack resistance of the antireflective coating when the said optical article is subjected to mechanical stresses,
**characterized in that** the said particulate silica is introduced into the said primer coating in such a way that the percentage by weight of particulate silica in the dry primer coating is between 45% and 55%, with respect to the weight of coating.

FIGURE 1

FIGURE 2

FIGURE 3

FIGURE 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008062142 A
- WO 03056366 A
- US 6187444 B
- US 5316791 A
- WO 0008493 A
- WO 9926089 A
- EP 0614957 A

- US 4211823 A
- US 5015523 A
- FR 2702486
- WO 2004111691 A
- WO 2008107325 A
- EP 0614957 B1

**Littérature non-brevet citée dans la description**

- Thin Film Processes'' and ''Thin Film Processes II. Académie Press, 1978